# EUROPEAN PATENT APPLICATION

(11) **EP 4 467 448 A1**
(43) Date of publication of application: **27.11.2024**
(21) Application number: 23175772.5
(22) Date of filing: 26.05.2023
(51) Int. Cl.: B64C 11/14, B64D 27/24, B64D 33/08, B64D 33/10, B64U 20/94, B64U 20/96, H02K 9/02, H02K 9/08

(54) **PROPELLER ENGINE AND AIRCRAFT**

(71) Applicant: Lilium GmbH, 82234 Wessling (DE)
(72) Inventor: KIRNER, Rudi, 82234 Wessling (DE)
(74) Representative: Schmidt, Steffen

(57) **Abstract**

A propeller engine (1) which is configured for providing thrust for an aircraft (100), in particular an aircraft (100) having vertical takeoff and landing capability, comprises a bearing structure (30); a propeller rotor (5) beared by the bearing structure (30), wherein the propeller rotor (5) includes multiple blades (51) and, upstream of the blades (51), a nose cone (50) which are attached to rotate with the propeller rotor (5), at least one electromotor (2) configured for driving the propeller rotor (5); and an air-cooling system (7) for at least one subsystem of the propeller engine (1) including at least one inlet opening (70) for receiving an intake stream of cooling air through the propeller rotor (5), wherein the air-cooling system (7) includes least one vortex chamber (71, 71a, 71b, 71c, 71d, 71e) connected to the propeller rotor (5), wherein the vortex chamber (71, 71a, 71b, 71c, 71d, 71e) is configured to receive the cooling air from the inlet opening (70) before the cooling air is provided to the at least one subsystem and/or wherein the at least one subsystem includes an electromotor subsystem (20) including a fluid barrier (21) separating a closed cooling circuit (8) containing electromotor electronics, in particular control electronics (21) and/or electromagnets, from the cooling air of the air-cooling system (7).

## Description

### Field

The invention relates to a propeller engine, preferably a fan engine, for providing thrust to propel an aircraft and to an array comprising several propeller engines. Furthermore, the invention relates to an aircraft, in particular an aircraft capable of vertical take-off and landing (VTOL), comprising such a propeller engine or array.

### Related Art

Aircraft capable of vertical take-off and landing (VTOL) have the potential to incorporate both the advantages of helicopters, namely starting and landing using the limited space and/or in rough terrain, as well as the advantages of conventional aircraft, such as high traveling velocities and cruising efficiently, with one another. Challenges in the design of VTOL aircraft include the necessity that, on the one hand, large propeller areas are required for the provision of a sufficient mass flow to create thrust into the vertical direction for takeoff or landing, and at the same time limit the energy consumption. On the other hand, propellers must be configured for the least amount of aerodynamic resistance for cruising, when the lift is dynamically created by means of suitable wing profiles. The reduction of energy consumption is particularly relevant in the case of electrically powered VTOL aircraft (eVTOL) such as the eVTOL aircraft described in Lilium^{®}'s patent application US 2016/0023754 A1. US 2016/03115221 A1 describes eVTOL aircraft with multiple electrically powered ducted fan engines, each of which comprise a shroud containing a stator with at least one stator vane or guiding vane and a rotor with several rotor blades.

In the development of electric propulsion systems for vehicles, there is a need for electric machines capable of outputting high power such that the system power of all combined electric machines is several hundred kilowatts (kW), for example for a short-range aircraft, or up to a megawatt (MW). Highly optimized and efficient electric machines are needed to meet these requirements. For aircraft, another important factor is that the electric drives must have a high power-to-weight ratio (kW/kg) and at the same time be designed to be particularly fail-safe.

For the generation of electric fields in electrical machines, permanent magnets are generally used instead of current-carrying coils (with high excitation loss), which are operated at high switching frequencies. This has the advantage that the efficiency of the electrical machine increases, but leads to a strong heating of the magnets and rotor yoke, especially in machines with high power output. As the temperature of the magnets increases, however, the magnetic field output decreases, which in turn reduces the efficiency of the electrical machine. When a magnet is operated beyond its maximum operating temperature, it initially experiences a reversible loss, becomes less magnetic and the efficiency of the drive drops. Above a higher temperature threshold, however, the magnet suffers an irreversible loss at which the efficiency of the machine is permanently impaired by permanent demagnetization of the magnets. To counteract the problem of temperature-induced demagnetization, the magnets of electrical machines with permanent high power output must be cooled.

In electrically powered aircraft engines, efficiency of the electric drive would suffer dramatically without cooling. Without cooling of the magnet, the power output must be limited so that natural heat transfer from the magnet is enough to keep it below a maximum temperature.

US 2020/0007007 A1 describes a cooling arrangement for an electric motor with a rotor and a stator of a propulsion system for an aircraft. However, cooling the rotating magnets of the electric machine rotor adds a great degree of complexity. Liquid cooling is also fundamentally highly complex in its design, increases the overall weight of the drive, and does not provide the required reliability and fail-safety. Using ambient air as cooling liquid, as suggested in US 2020/0007007 A1, however causes unwanted particles such as debris and water droplets to enter the engine, which can build up within the engine to negatively affect engine functionality and integrity. Contaminants such as water and debris may cause hardware degradation, air path blockages, and corrosion.

EP 3 998 696 A1 and EP 4 155 193 A1 relate to cooling of an electric drive of an aircraft designed in order to provide efficient cooling with a failsafe design of low complexity and low weight. The designs use the rotor blades or stator vanes coupled to the electromotor in a heat conducting manner to transfer heat from the engine to the ambient. However, additional cooling may sometimes be desired.

### Description

It is an object of the invention to overcome the disadvantages of the prior art, in particular to provide a propeller engine, in particular a fan engine, preferably a ducted fan engine, and aircraft, particularly a VTOL, more particularly an eVTOL, with an alternative cooling system, preferably a cooling system having an improved efficiency, preferably being particularly lightweight and/or resilient to contaminants including dust, debris and water. This objective is solved by the subject matter of the independent claims.

Accordingly, a propeller engine is configured for providing thrust for an aircraft, in particular an aircraft having vertical takeoff and landing capability. The propeller engine, which may in particular be realized as a fan engine, such as an unducted fan engine or a ducted fan engine, comprises a propeller rotor, at least one electromotor and an air-cooling system. The propeller engine includes a bearing structure. The bearing structure may be equipped with one, two, or more bearings, in particular roller bearings. The bearing structure can be attachable or attached to the aircraft fuselage or to an aileron.

The propeller rotor is beared by the bearing structure. The propeller rotor includes multiple blades and, upstream of the blades, a nose cone. The nose cone and/or the blades are attached to rotate with the propeller rotor. The nose cone is a preferably rotationally symmetrical body. In a cross section along the rotary axis, the nose cone may have a generally curved and/or cone-like shape defining a flow profile. The nose cone may in particular describe the forward tip of the propeller rotor. The flow profile defined by the nose cone describes be continue along a section of the propeller rotor extending behind the forward tip having a widening diameter, in particular continuously and/or degressively widening, diameter. In the axial direction (corresponding to the rotary axis of the propeller rotor) the nose cone may describe a curved flow profile, wherein the curvature ends and/or reaches its maximum diameter at a cone basis. The cone basis is preferably arranged upstream of the rotor blades. Preferably, the rotor blades are connected to the nose cone such that the nose cone and the rotor blades are coupled to each other to perform substantially the same rotational movement about the rotary axis of the propeller rotor. The number of rotor blades may preferably be selected to be at least 2 and no more than 50. A preferred number of rotor blades may be at least 4, at least 8, at least 20, or at least 25 and/or no more than 40 or no more than 38. The number of rotor blades may in particular be selected between 28 and 35. Preferably, the rotor blades are arranged in a single stage.

The at least one electromotor is configured for driving the propeller rotor. The at least one electromotor may have an output shaft directly coupled to the rotor, or may be provided with a transmission coupling an output shaft of the electromotor to the rotor. The arrangement of an electromotor in the proximity of the rotor allows to minimize drag impact of the motor onto the aircraft, thus allowing for increased overall aircraft operation efficiency. The electromotor may include an electromagnetic rotor coupled to the propeller rotor, in particular directly to a shaft onto which the rotor blades are mounted, or indirectly via a transmission, such as a planetary gear. The propeller engine according to the invention is electrically driven. It shall be clear that the propeller engine according to the invention may be free of a combustion chamber, free of a (multistage) compressor, in particular a compressor for compressing environmental air to be supplied to the combustion chamber, and/or free of a (multistage) turbine, in particular a turbine driving the compressor.

According to the invention, the air-cooling system is provided for at least one subsystem of the propeller engine. The air-cooling system includes at least one inlet opening for receiving an intake stream of cooling air through the propeller rotor. One or more inlet openings may be arranged on the propeller rotor, particularly on the nose cone. The one or more inlet openings may be arranged coaxially with respect to the rotary axis and/or evenly distributed in the circumferential direction.

Further according to the invention, the air-cooling system includes least one vortex chamber connected to the propeller rotor. The at least vortex chamber is configured to receive the cooling air from the inlet opening before the cooling air is provided to the at least one subsystem. Inside of the vortex chamber, the cooling air received through the inlet opening may preferably be subjected to centrifugal forces. The air-cooling system may preferably be configured such that the stream of cooling air performs a spiraling motion (vortex, cyclone) within the vortex chamber. The outer wall of the vortex chamber may correspond to the circumferential wall of the propeller rotor, in particular the nose cone. Preferably, the vortex chamber is configured to perform a rotary motion together with the propeller rotor, in particular the nose cone and/or rotor blades, in particular the same rotary motion as the nose cone and/or rotor blades. In particular, the air-cooling system is configured to guide cooling air from the ambience through the inlet opening to the vortex chamber and from the vortex chamber to the at least one subsystem. The air-cooling system is preferably configured to receive the cooling air from the ambience. Preferably, the air-cooling system is configured to receive ambient air to be used as cooling air through the at least one cooling inlet. The at least one cooling inlet may in particular serve as a direct conduit from the ambience to the vortex chamber or be in fluid communication with the vortex chamber through an inlet channel. The propeller engine according to the invention may comprise two or more vortex chambers. The air-cooling system may comprise several vortex chambers, in particular connected in series. The air-cooling system may in particular be configured such that cooling air is guided through a first vortex chamber and thereafter through a second vortex chamber, and after passing through the first and second vortex chamber to the at least one subsystem. By using rotary motion of the propeller rotor, the stream of cooling air may be processed to be provided to the systems requiring cooling in a particularly lightweight and efficient manner. The vortex chamber of the air-cooling system may preferably be used to control and/or divide the intake stream so as to guide a portion of the intake stream having advantageous characteristics to the at least one cooling system (first portion) while discharging another portion (second portion) of the intake stream of less desireable characteristics. A second portion of the intake stream may for example contain an increased amount of contaminants in comparison to the first portion of the intake stream provided as cooling air to the at least one subsystem. Alternatively or additionally, the first portion may be smaller in volume flow than the second portion in some states of engine operation and larger in other states of operation. In some states of operation it may for example may be undesired to cool the electromotor too much (in order to avoid condensation or ice formation). In some states of operation, for example during vertical takeoff or landing, large streams of cooling air through the internal air-cooling system may be undesired for fear of contaminants. A vortex chamber has also proven advantageous thanks to its simple and failsafe design.

In a preferred embodiment, a propeller engine further includes a propeller stator having one or more radially extending vanes and a shroud circumferentially surrounding the propeller stator and optionally the propeller rotor. In this case, the propeller rotor may be referred to as a fan rotor. The propeller stator may be referred to as a fan stator. The shroud circumferentially surrounds the propeller stator. The propeller rotor may preferably be rotatably supported by the propeller stator. A propeller engine including a propeller stator and propeller rotor surrounded by a shroud may be referred to as a (ducted) fan engine. In this embodiment, the inlet opening is arranged upstream of stator vanes. In particular, the shroud defines a width, in particular inner diameter, no larger than 500 mm, in particular in a range of 200 mm to 400 mm, more particularly in a range of 270 mm to 330 mm. The electromotor may include an electromagnetic stator attached to the propeller stator (fan stator). The at least one electromotor for driving the fan rotor is preferably arranged within the propeller stator. It may be preferred that the propeller engine comprises no more than one propeller rotor and/or no more than one propeller stator. It may be preferred that the electromotor is encased within a stator housing and/or within a stator hub. The at least one subsystem configured to be cooled by the air-cooling system may comprise or consist of the electromotor stator. In the axial direction corresponding to the rotary axis of the propeller rotor, the nose cone may describe a curved profile. The curved profile may have a curvature ending at and/or reaching maximum diameter at a cone basis, wherein in particular the cone basis is arranged upstream of the stator vanes. The propeller stator may include a truncated cone section extending in a cone-like manner from the nose cone, particularly in a flush manner, more particularly extending the curved flow profile of the nose cone. The propeller stator may have one or more substantially radially extending vanes. In particular, the propeller engine may have at least 4, in particular at least 8 vanes, and/or no more than 30 vanes, in particular no more than 20 vanes. Several stator vanes may be arranged on the outside of the stator housing in a rotationally symmetrical manner and/or in equal circumferential distances to one another. In one embodiment, the propeller engine has 12, preferably identical, stator vanes. Preferably, the at least one stator vane extends radially between an inner surface of the shroud and an outer surface of a stator housing. The bearing structure is preferably included in the stator housing

The propeller rotor may in some embodiments comprise a disk, in particular a blisk, including an annular body portion to which the rotor blades are firmly attached, wherein in particular the annular body portion and the rotor blades may be formed integrally (monolithic). In case the propeller engine is realized as a fan engine, the blisk may be referred to as a fan disk.

In some further developments, it may be preferred that the nose cone is rigidly attached to a blisk holding the rotor blades. The nose cone and the rotor blades may be rotatably mounted to the propeller rotor stator using the same rotary bearing. In particular, the nose cone and the disk form a continuous flow profile. The flow profile may continue from the nose cone, in particular from the nose tip, in the axial direction and have a maximum diameter downstream of the rotor blades or between the leading edge and the trailing edge of the rotor blades. In particular, the nose cone is coaxial with regard to a rotary axis of the propeller engine, wherein the rotor blades extend radially outward from the nose cone. In a particularly preferred embodiment, the rotor blades are rigidly coupled and/or coupled in a nonrotational manner such that the rotor blades and the nose cone perform the same rotary motion around the rotary axis. The propeller stator may include a truncated cone section extending in a cone-like manner from the nose cone, particularly in a flush manner, more particularly extending the curved flow profile of the nose cone rearward to a cone basis downstream of the stator vanes, or between the leading edge and the trailing edge of the stator vanes. In a particularly preferred embodiment, the nose cone describes a curved flow profile in a cross section along the rotary axis ending at a cone base axially arranged between the rotor blades and the stator vanes.

In another embodiment which may be combined with the aforementioned one, the preferably singular, inlet opening is arranged at the tip of the nose cone. The nose tip may designate the position of the nose cone pierced by the imaginary rotary axis of the propeller rotor. Alternatively or additionally, the at least one inlet opening is arranged on a circumferential wall of propeller rotor, preferably the nose cone, in particular wherein the inlet opening leads to an inlet channel. Preferably, the inlet channel extends in a circumferential direction with respect to the rotary axis of the propeller rotor. It may be preferred that the inlet channel extends from the inlet opening on the outside surface of the propeller rotor, particularly the nose cone, in the same clockwise or counterclockwise circumferential direction in which the propeller rotor, particularly the nose cone and/or in which the rotor blades, is configured to revolve. The inlet channel may be formed to guide the intake stream of cooling air from the inlet opening to enter the vortex chamber in a circumferential and/or essentially tangential direction. The inlet channel may impart a spiraling motion onto or amplify a spiraling motion of the cooling air as it enters the vortex chamber, wherein it shall be clear that the cooling air may flow with an axial motion component in the air-cooling system.

In some embodiments of a propeller engine, the at least one inlet opening is arranged downstream of the rotor blades, in particular at a rear end of the disk. Preferably, the inlet opening is arranged upstream of the rotor blades with respect to the core stream of the propeller engine passing through the rotor blades and stator vanes. In a particularly preferred embodiment, the nose cone describes a curved flow profile in a cross section along the rotary axis, and the at least one inlet opening is arranged along said curved flow profile, preferably with a radial offset from the rotary axis and/or nose tip. A nose tip shield preferably has a larger radial extension than at least one or one singular inlet opening arranged at the nose tip or near the nose tip.

In some embodiments of a propeller engine, wherein the inlet opening is provided with a cover to prevent water ingestion into the air-cooling system. In particular, the inlet opening is provided with a nose tip shield, wherein in particular the nose tip shield is arranged forward of the nose tip of the nose cone and/or wherein the at least one, preferably singular, inlet opening is arranged at the nose tip. A cover, in particular a nose tip shield, protects the air-cooling system from large contaminants such as foreign objects, sand or hail. The cover, in particular the nose tip shield, additionally protects the air-cooling system from water such as rain, especially when the propeller engine is tilted upwards in a vertical or inclined orientation, for example during parking, ground operation or takeoff.

In a further development of a propeller engine including a cover, the inlet opening is connected with an inlet channel that extends in a forward direction from the inlet opening and wherein the inlet channel is radially covered by the cover. In this embodiment, the cover may overlap the inlet opening in the axial direction towards front and laterally in the radial direction. It may be preferred that the inlet opening faces in a rearward direction (against the flight direction, corresponding to the flow direction of the core stream through the rotor blades and optionally stator vanes). In particular, the inlet channel is arranged between circumferentially adjacent concave grooves on the outer circumference of the nose cone and wherein the cover forms a convex shield above inlet channel. The grooves may be configured to guide water along the outside of the nose cone, preferably away from the inlet opening or openings, preferably according to the Coand 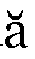 effect. The inlet channel may extend from the inlet opening in the forward direction (in the flight direction, against the flow direction of the core stream) and in circumferential direction. Such a cover adds an additional layer of protection to the air-cooling system, as the cover deflects contaminants and urges them to follow the core flow before the intake stream enters the inlet opening.

In a preferred embodiment, the propeller engine contains at least one cavity, wherein the air-cooling system extends through one or more cavities. Preferably, the at least one vortex chamber is provided inside of the cavity. Preferably, the at least one cavity may be provided in the propeller rotor, wherein in particular the at least one cavity rotates as one with the propeller rotor. Optionally, at least one cavity may be provided in the propeller stator, wherein in particular the at least one cavity may be stationary with respect to a supporting structure such as the fuselage, aileron, at least one stator vane or shroud. The propeller engine may include several cavities and a respective vortex chamber may be provided in one or more of them. It is conceivable that a vortex chamber extends from one cavity into another one. It may be preferred that the cavity is annular and/or symmetrical with respect to the rotary axis.

The air-cooling system may be configured such that cooling air passes through the nose cone cavity, the central cavity and/or the blisk cavity.

The at least one cavity may in particular include a nose cone cavity disposed inside of the nose cone. The nose cone cavity may preferably be arranged forward of a first bearing of the propeller rotor. The nose cone cavity may be surrounded by the nose cone outer wall, in particular at the nose tip and/or between the nose tip and the cone base.

Alternatively or additionally, the cavity may in particular include a central cavity surrounded, preferably with respect to the rotary axis, by the electromotor and/or the stator vanes in the radial direction. Alternatively or additionally, the central cavity is arranged between (and thus surrounded by) a first bearing and a second bearing in an axial direction. In the propeller engine, the propeller rotor may be rotatably mounted to the propeller stator by the first bearing and/or the second bearing. In case of a cavity, particularly the nose cone cavity, the central cavity and/or the blisk cavity, being arranged adjacent to a bearing, in particular the first bearing and/or the second bearing, the respective bearing may preferably be equipped with seal for separation from cooling air flowing through the adjacent cavity.

Further alternatively or additionally, the cavity may in particular include a blisk cavity adjacent to the rotor blades, in particular surrounded by the rotor blades in the radial direction. A blisk may designate a disk to which the rotor blades are, preferably rigidly, attached. Optionally, the blisk cavity is arranged adjacent to the first bearing. In particular, the blisk cavity extends radially from the first bearing to the disk or blisk holding the rotor blades. The blisk cavity may be limited in the radially inward direction by the first bearing and in the radially outward direction by the disk or blisk.

According to another alternative or additional option, the cavity may in particular include a shaft cavity of a hollow shaft connecting the rotor blades to the electromotor. The hollow shaft may be provided to transfer torque from the electromotor to the rotor blades.

Cooling of a propeller shaft, either on its inside in a shaft cavity, or on its outside in a nose cone cavity and/or central cavity, or both, has shown to be very helpful to avoid the shaft from developing hot spots. With insufficient cooling, a propeller engine may become structurally unsound due to excessive thermal stress and fatigue.

Alternatively or additionally, the cavity may in particular include an electronics cavity partially containing the electromotor, in particular the electromotor rotor, and being surrounded by the propeller stator, in particular the stator vanes and/or the electromotor stator. It may be particularly preferred to combine an air-cooling system which guides cooling air or another cooling medium through the electronics cavity with an embodiment such as described below which includes at least one cyclone separator arranged upstream of the electronics cavity in the air-cooling system.

Alternatively or additionally, the cavity may in particular include a rearward cavity arranged to the rear of the electromotor, the second bearing and/or the stator vanes.

The nose cone cavity, central cavity and/or the blisk cavity are associated with, in particular rotate together with, the propeller rotor. Optionally, the electronics cavity and/or the rear cavity may be associated with the propeller rotor. The electronics cavity and/or the rear cavity may be associated with the propeller stator, in particular be stationary.

It was surprisingly found that the provision of no flow guides within the central cavity through which cooling air is guided yields advantageous cooling properties. The air exchange in the central cavity and convective cooling provided thereby by itself has a large impact on the cooling of the subsystems. Preferably, in this case, the central cavity does not contain a vortex chamber.

In a preferred embodiment of a propeller engine, the vortex chamber includes at least one cyclone separator for removing contaminants, such as particles and/or water, from cooling air of the intake stream, preferably using centrifugal force. The cyclone separator may be configured to receive and/or guide cooling air in a spiraling path along a circumferential wall. Preferably, the cyclone separator extends annularly around the rotary axis so as to allow cooling air to perform at least one complete helical path around the rotary axis. In particular, the cyclone separator allows cooling air of the intake stream to rotate freely around the rotary axis. The cyclone separator may have a conical shape, preferably corresponding to the outer shape of the propeller rotor, particularly the nose cone. The cyclone separator may be configured to rotate together with the propeller rotor. The cyclone separator is preferably configured such that relatively heavyweight or massive components of the intake stream, such as contaminants including debris, dust, sand, water, and/or ice, or the like, are forced radially outward by the centrifugal force, whereas relatively lightweight components of the intake stream, such as dry air and/or humid air, flows through the radially inner portion of the vortex chamber. The cyclone separator preferably has at least one drain for removing contaminants and at least one exit for cleaned cooling air. Advantageously, a cyclone separator may be capable of removing virtually all of the contaminants which may have entered the air-cooling system through the inlet opening, such as water or debris, so as to protect the components of the air-cooling systems downstream of the cyclone separator, in particular any subsystems.

In a preferred embodiment of a propeller engine with an air-cooling system including a cyclone separator, the cyclone separator includes at least one radial wall for guiding contaminants extending in a radial direction from the rotary axis. In particular, the at least one radial wall forms a helix screw around the rotary axis. Alternatively or additionally, the radial wall is at least sectionally or completely attached to a circumferential inner surface of a cavity, in particular the nose cone cavity or the central cavity. In this embodiment, it may be preferred that the circumferential inner surface of the cavity and the radial wall or walls attached thereto rotate together with the propeller rotor as one. When the cyclone separator is rotated as part of the propeller rotor, the cleansing effect is augmented.

According to another embodiment of a propeller engine, which may be combined with the aforementioned one, the cyclone separator includes a radially central axial conduit, in particular surrounded by the radial wall or radial walls. Alternatively or additionally, the cyclone separator includes a radially central deflector, in particular arranged in the radially central axial conduit and surrounded by the radial wall or radial walls. The provision of a central axial conduit and/or a deflector may serve to further augment the separation of contaminants from the cooling air in the cyclone separator. The use of a deflector may be particularly helpful to direct contaminants radially outward if ingesting cooling air at the front is desired, in order for the air-cooling system to receive cooling air of maximal inlet pressure.

In a further development of a propeller engine, which may be combined with the aforementioned ones, the cyclone separator includes at least one drain for discharging contaminants to the atmosphere. The at least one drain may in particular be realized as a radial aperture or as an axial aperture. The axial drain aperture in particular exits from the central cavity to the atmosphere. Preferably, the cyclone separator comprises no more than one axial drain. The radial aperture may in particular exit from the nose cone cavity. It may be preferred that the cyclone separator includes multiple radial drains, in particular at least 5, at least 10, or more. Multiple radial drains may be circumferentially and/or axially spaced, in particular along the propeller rotor, particularly the nose cone.

In a preferred embodiment, the air-cooling system includes at least one air sink for discharging the cooling air, in particular to a core flow of the propeller engine, wherein the air-cooling system is configured such that a pressure difference between inlet opening and the air sink urges the cooling air from inlet opening through propeller rotor, particularly the nose cone, preferably by at least one subsystem, and/or through at least one cavity, to the air sink.

According to a preferred embodiment of a propeller engine, the inlet opening is arranged upstream of the air sink with respect to the core flow of the propeller engine. The air sink is in particular arranged downstream of the at least one rotor blade.

According to an alternative embodiment of a propeller engine, the inlet opening is arranged downstream of the air sink with respect to the core flow of the propeller engine. The inlet opening may in particular be arranged downstream of the at least one rotor blade on the circumference of the propeller rotor and the air sink upstream of the at least one rotor blade. By providing the air sink upstream of the rotor blades, exiting cooling air that has received heat from at least one component or subsystem in the air-cooling system, may subsequently be used for de-icing the rotor blades.

In another preferred embodiment of a propeller engine, which may be combined with the aforementioned one, the vortex chamber includes at least one vortex modulator for selectively guiding cooling air to at least one subsystem or to the air sink. A vortex modulator is preferably configured to receive cooling air and to guide the cooling air dependent on its flow characteristics to a first or second opening. The at least one vortex modulator may optionally be associated with multiple subsystems and/or a plurality of vortex modulators may be associated with at least one respective subsystem. Optionally, the air-cooling system of the propeller engine includes least one vortex modulator and at least one cyclone separator. It may be preferred that the vortex modulator is arranged upstream of the cyclone separator in the air-cooling system.

In a further development of a propeller engine including a vortex modulator, the vortex modulator has a first state in which cooling air is guided through the vortex modulator predominantly to at least one subsystem and a second state in which cooling air is guided by the vortex modulator predominantly to the air sink. The vortex modulator is in particular configured to be operated in the first state in case of a low pressure difference between the inlet opening and the air sink, preferably below a predefined pressure difference threshold value, and in the second state in case of a high pressure difference between the inlet opening and the air sink, preferably above a predefined pressure difference threshold.

In another further development of a propeller engine including a vortex modulator that may be combined with the previous one, the vortex modulator comprises a spiral shaped conduit connected to the inlet opening so as to receive cooling air at the outer end of the spiral shaped conduit, preferably in a tangential direction, wherein the vortex modulator has at least one first opening arranged in a circumferential wall section of the spiral shaped conduit for guiding cooling air to at least one subsystem and at least one second opening arranged at the inner end of the spiral shaped conduit connected with an air sink.

In a preferred embodiment of a propeller engine, the at least one (active) subsystem includes a propeller shaft, in particular a hollow shaft, at least one bearing, in particular at least one ball bearing, and/or the electromotor. An subsystem may in particular be a subsystem of the propeller engine which generates heat during propeller engine operation and/or a subsystem of the propeller engine susceptible to failure due to overheating.

According to yet another aspect of the present invention, which may be combined with the above-mentioned aspect and its embodiments, a propeller engine is provided which is configured for providing thrust for an aircraft, in particular an aircraft having vertical takeoff and landing capability. The propeller rotor comprises a bearing structure, a propeller rotor beared by the bearing structure, wherein the propeller rotor includes multiple blades, and, upstream of the fan blades, a nose cone which are attached to rotate with the propeller rotor, at least one electromotor configured for driving the propeller rotor and an air-cooling system for at least one subsystem of the propeller engine including at least one inlet opening for receiving an intake stream of cooling air in the propeller rotor. According to this aspect, the at least one subsystem includes an electromotor subsystem including a fluid barrier separating a closed cooling circuit containing electromotor electronics. The fluid barrier separates the closed cooling circuit from the cooling air of the air-cooling system. The electromotor electronics contained in the closed cooling circuit may in particular comprise or consist of control electronics for at least partially controlling the operation the electromotor, in particular the electromotor rotor and/or stator, and/or electromagnets of the electromotor, in particular the electromotor rotor and/or stator. The provision of the closed cooling circuit adds an additional layer of protection between all or some of the electromotor electronics and any residual contaminants in the ambient air processed as cooling medium in the air-cooling system.

In a further development of a propeller engine, the electromotor subsystem includes a directing means, such as an impeller, for defining the flow direction of closed cooling circuit fluid, in particular air, preferably dry air, inside of the electromotor subsystem. The directing mans serves to guide the cooling circuit fluid within the closed cooling circuit. The directing means thus enhances convective heat transfer from the electromotor subsystem. Additionally or alternatively, the directing means may enhance convective heat transfer from the closed cooling system to the fluid barrier and/or heat exchanger thermally connecting the cooling air in the air-cooling system and the closed cooling circuit.

The present disclosure further relates to an array of several, in particular two, three or five, propeller engines rigidly coupled to one another, in particular in an axis-parallel manner. It may be preferred that the propeller engines are propeller engines (ducted fan engines) including a shroud and at least one stator vane as described above.

The disclosure also relates to an aircraft, in particular passenger aircraft, having vertical takeoff and landing capability including a fuselage and at least one propeller engine, in particular ducted fan engine, in particular an array, pivotably connected to the fuselage around a pitch axis of the aircraft.

### Brief description of the drawings/figures

Preferred configurations of the invention are described in the dependent claims. The accompanying drawings illustrate the embodiments of the present disclosure and, together with the description, further serve to explain the principles of the embodiments and to enable a person skilled in the pertinent art to make and use the embodiments.
- Fig. 1: a schematic perspective view of an eVTOL aircraft according to the invention;
- Fig. 2: a schematic sectional view of a propeller engine according to the invention;
- Fig. 3: a schematic perspective view of a propeller engine according to the invention;
- Fig. 4: a schematic sectional view of a propeller engine according to a particular embodiment of the invention;
- Fig. 5: a schematic sectional view of a propeller engine according to an embodiment of the invention including a cyclone separator in the nose cone;
- Fig. 6: a schematic sectional view of a propeller engine according to a further embodiment of the invention including a different cyclone separator in the nose cone;
- Fig. 7: a schematic sectional view of a propeller engine according to another embodiment of the invention including another cyclone separator in the nose cone;
- Fig. 8: a schematic sectional view of a propeller engine according to an embodiment of the invention including a cyclone separator in a central cavity;
- Fig. 9: a schematic sectional view of a propeller engine according to a particular embodiment of the invention including multiple vortex chambers
- Fig. 10: a schematic illustration of a propeller engine according to a particular embodiment of the invention including a vortex modulator; and
- Fig. 11: a schematic illustration of the vortex modulator shown in Fig. 10.

The exemplary embodiments of the present disclosure will be described with reference to the accompanying drawings. Elements, features and components that are identical, functionally identical and have the same effect are - insofar as is not stated otherwise - respectively provided with the same reference character.

Reference numeral 100 generally designates an aircraft provided with two sets of propeller engines 1 arranged into a respective array 110. Hereinbelow, with reference to the exemplary embodiments illustrated in the drawings, a fan engine is generally shown and described as a preferred embodiment of a propeller engine 1. However, the it should be clear that an electrically driven propeller engine 1 might alternatively be designed without a shroud covering the propeller rotor 5 or rotors.

The aircraft 100 comprises a fuselage 103 with wings 105 attached thereto. Each wing 105 carries a respective array 110 of propeller engines 1. It is conceivable that each wing 105 carries two or more respective arrays 110 of propeller engines 1 and/or one or more propeller engines 1 mounted individually pivotable to the wing 105 and/or fuselage 103. In the illustrated embodiment, the aileron 107 with the engine 1 is rotatably attached to the fuselage 103 via the wing 105. In relation to the fuselage 103, the engine 1 is pivotable around the lateral or pitch axis Y corresponding to the direction of the wing span.

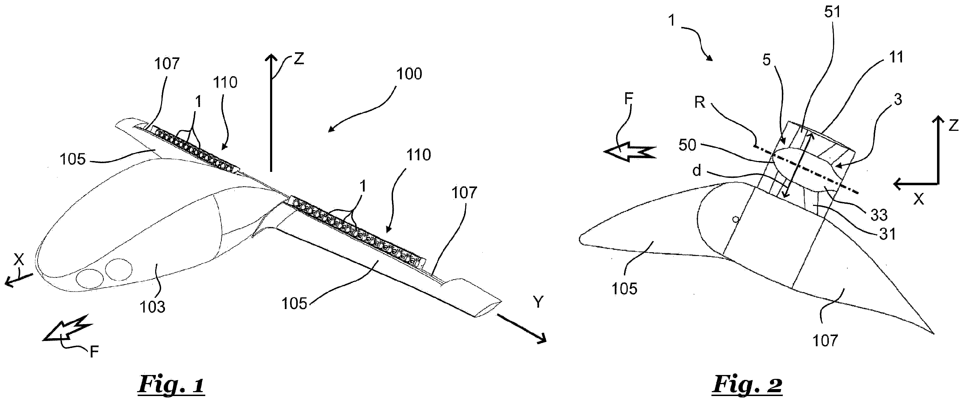

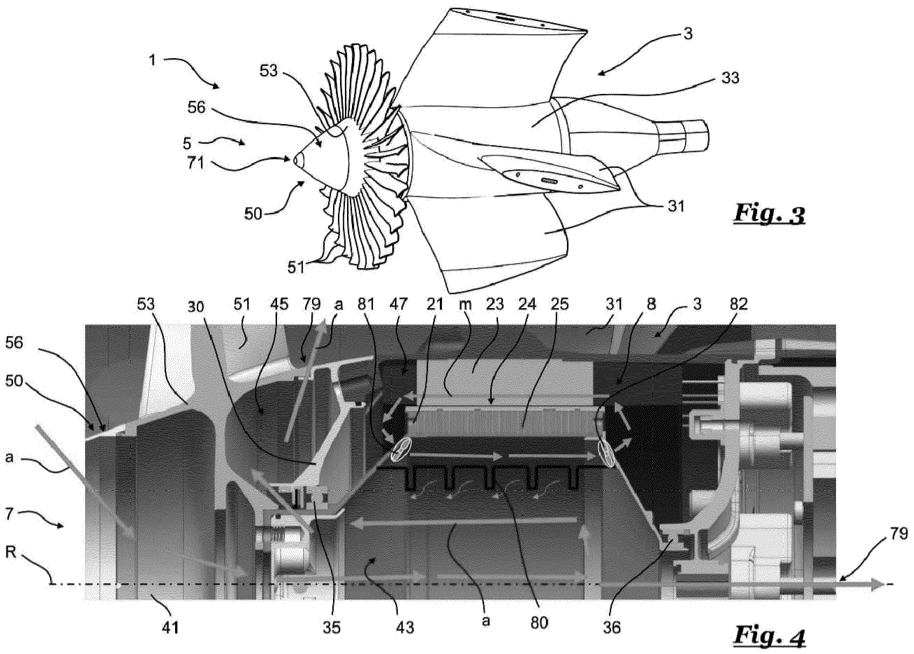

Fig. 1 shows the aircraft 100 having the array 110 arranged in a tilted position in relation to the fuselage 103. Fig. 1 shows the aileron 107 including the engine array 110 comprising a multitude of electrically powered propeller engines 1, shown as fan engines, arranged in a tilted intermediate pivoting position which may correspond to a state after take-off and before cruise flight, or after cruise flight and before landing, which is shown in further detail in Fig. 2. The electromotor 2 for driving the propeller engine 1 for propelling the aircraft 100 is described in further detail hereinbelow with regard to Figs. 4.

It shall be clear that the engines 1 could be in a different position, such as a cruise flight position in which the rotary axis R of the engines is arranged corresponding, in particular essentially parallel or parallel, to the longitudinal or roll axis X (not shown). In the cruising position, the direction of thrust T of the engine 1 is aligned with the forward cruise flight direction F. The forward cruise flight direction F may correspond to the longitudinal axis or roll axis X of the aircraft 100. Alternatively, it shall be clear that the engines 1 could be arranged in yet another position, such as a vertical take-off and/or landing or hovering position in which the axis R of the engines is arranged corresponding, in particular essentially parallel or parallel, to the vertical or yaw axis Z (not shown).

Fig. 2 shows the aileron 107 with an engine 1 in a tilted intermediate pivoting position which may correspond to a state after take-off and before cruise flight or after cruise flight and before landing. The multitude of electrically powered fan engines are arranged immediately adjacent one another in the direction of the pitch axis Y of the aircraft 100. In the exemplary embodiment of a passenger aircraft 100 including a cabin shown in Fig. 1, one pair of arrays 110 of multiple individual ducted fan engines is attached to the rear of the left and right wing 105. Alternatively, several pairs of arrays 110 could be attached to the wings 105, for example two, three or four pairs of arrays 110, wherein each array may be pivotable with regard to the fuselage 103 independent of the other. At least one pair of ducted fan engines or at least pair of arrays of ducted fan engines may alternatively or additionally be attached to the front of the aircraft 100, optionally as or in combination with a canard structure (not shown).

The width or inner diameter d defined by an inner surface of the shroud 11 of the propeller engine 1 indicated in Fig. 2 as a fan engine surrounds the blades 51 of the rotor 5. The fan engine 1 defines a rotary axis R in regard to which the shroud 11, stator 3, and rotor 5 are arranged coaxially. With regard to an airflow streaming through the engine 1 for propelling the aircraft, the rotor 5 is arranged upstream of the stator vanes 31. The shroud 11 defines an approximately cylindrical cross-section for the airflow. The diameter d of the shroud 11, in particular in the area of the rotor 51, may be less than 500 mm, in particular between 250 and 350 mm, for example 300 mm.

Several vanes 31 of a stator 3 attaching the rotor 5 to the shroud 11 are arranged downstream relative to the blades 51. The outer diameter of the rotor 5 defined by the distal ends of the rotor blades 51 is almost as large as the inner diameter d of the shroud 11. In the exemplary embodiment of a fan engine 1, the single rotor 5 includes 33 rotor blades, which may all be of the same design.

Fig. 3 shows a schematic perspective view of the stator 3 and rotor 5 of the fan engine 1. The shroud 11 is not shown in Fig. 3 so that the other components are clearly visible. The stator 3 shown in the exemplary embodiment comprises four large stator vanes 31 which may alternatively be called guiding vanes or stator blades. The stator vanes 31 extend in a generally radial direction from a stator housing towards the shroud 11. The stator housing may be of generally cylindrical design and contain at least one electromotor for driving the rotor 5 therein. A single inlet opening 70 for the air-cooling system 7, which will be described in further detail below, is arranged at the tip of the nose cone. The inlet opening 70 is arranged coaxially on the rotary axis R.

The guide vanes 31 may all be of the same design. The guide vanes 31 each define a respective airfoil. The airfoil of each guide vane 31 may be essentially constant along the radial extension of the vane 31. The guide vane 31 may have a leading edge and the trailing edge both of which may be inclined with respect to the radial direction R at an angle between 20° and 45°, in particular approximately 30°. The stator vanes 31 attach the stator housing 30 and the rotor 5 rotatably mounted thereto to the shroud 11. The stator vanes 31 define an airfoil with a continuous inclination γ of for example approximately 15° with regard to the rotary axis R. The axial vane length measured along the stator housing 30 is substantially larger than the axial blade length measured at the stator hub.

The propeller rotor 5 includes a nose cone 50 coaxial with regard to the rotary axis R of the fan engine, wherein the rotor blades 51 extend radially outward from the nose cone 50. The rotor blades 51 may be part of a blisk 53 rigidly coupled to the nose cone 50.

The guide blades 51 may all be of the same design. The airfoil of the rotor blades 51 extends approximately parallel to the rotary axis R in the proximity of the outer surface 56 of the propeller rotor. The outer surface 56 of the nose cone 50 may define a curved flow profile, which optionally extends along the outer surface of the blisk 53. Alternatively or additionally, the airfoil of the rotor blades extends at an inclination of approximately at least 20° and/or no more than 60° with respect to the rotary axis R at an end of the rotor blades 51 distal with regard to the nose cone 50. The airfoil of the rotor blades 51 may at their respective distal end have an inclination of approximately at least 35° and/or no more than 45°, in particular approximately 40°, with respect to the rotary axis. In the radial extension of a rotor blade, the inclination of its airfoil may increase continuously towards the outside.

Fig. 4 shows a cross sectional view of an exemplary air-cooling system 7 for cooling subsystems of a propeller engine. In the illustrated example, the subsystems which generate heat to be transferred through the air-cooling system 7 includes the rotor shaft, the electromotor subsystem 20 of the electrically driven propeller engine 1 and the bearings 35, 36 mounting the propeller rotor 5 to the propeller stator 3. The propeller stator 3 is essentially stationary with respect to the aileron 107 of the aircraft 100. The propeller stator 3 includes a bearing structure 30 to which the bearings 35, 36 are mounted which bear the propeller rotor 5. Alternatively, the propeller stator might be essentially stationary with respect to the aircraft fuselage 103 (not shown).

The electromotor subsystem 20 includes an electromotor rotor 25 fixed to the propeller rotor 5 and an electromotor stator 3 fixed to the propeller stator 3. The electromotor rotor 25 is separated from the electromotor stator 23 by a gap 24. Electricity powering the electromotor 2 causes the permanent magnets and/or electromagnets and other components thereof to heat up during operation. This heat shall, at least in part, be dissipated through the air cooling system 7. Further heat sinks, such as for example described in EP 3 998 696 A1 or EP 4 155 193 A1 may be used as well (not shown). Bearings 35, 36 which are illustrated herein as roller bearings, develop heat due to friction when the propeller rotor 5 rotates with respect to the propeller stator 3. Both the electromotor rotor 23 and the bearings 35, 36 are coupled to the rotor shaft so that it receives heat. In case the rotor shaft overheats, it may become structurally unsound. Undue thermal loads on the rotor shaft may cause excessive thermal stress and fatigue.

The subsystems are arranged inside of the stator hub 33 and the propeller rotor 5. The air-cooling system 7 serves to guide air as a cooling fluid through the stator hub 33 and the nose cone 50. The propeller engine 1 contains several cavities through which the air-cooling system 7 guides air as coolant to the subsystems.

The nose cone 50 may encase a nose cone cavity 41. The nose cone cavity 41 may in the axial direction (the direction parallel to the rotary axis R) extend between a forward bearing 35 (first bearing) and the outer wall 56 of the nose cone 50. The outer wall of the nose cone 50 preferably surrounds the nose cone cavity 41 in the radial direction perpendicular to the rotary axis R. The nose cone cavity may be provided with one or more inlet openings 70 of the air-cooling system 7 for receiving an inlet stream of cooling air a. In some embodiments, the nose cone cavity can be provided with one or more drains 76 for discharging contaminants c from the cooling air a. In some embodiments it may be conceivable that one or more air sinks connect the nose cone cavity 41 for discharging used cooling air a to the core flow of the propeller engine 1 through the rotor blades 51 (not shown). The front cone cavity 41 may have a generally cylindrical or generally conical shape.

A rearward cavity 49 may be encased in the stator hub 33 of the propeller engine 1. The rearward cavity may be arranged behind a rearward bearing 36 (second bearing). It may be preferred that the rearward cavity 49 is provided with an air sink 79 where a pressure substantially lower than the pressure at the inlet opening 70 persists for urging the cooling air a through the air-cooling system 7. Alternatively or additionally, the rearward cavity 49 may be connected to a vortex chamber 71, particularly a cyclone separator, and contain at least one drain 76 for dispensing contaminants c from the air-cooling system 7. The rearward cavity 49 may have a generally cylindrical or generally conical shape.

A central cavity 43 may for example extend in the axial direction between a first bearing 35 and a second bearing 36 mounting the propeller rotor 5 to the propeller stator 3. The central cavity 43 may in particular be arranged inside of the stator hub 33. In the radial direction perpendicular to the rotary axis R, the electromotor 2 may at least partially surround the central cavity 5. The central cavity 43 may be arranged in the axial direction behind the nose cone cavity 41. The central cavity 43 may be arranged forward of the rearward cavity 49 in the axial direction. The central cavity 43 may have a generally cylindrical shape.

An electromotor cavity 47 may be provided, preferably inside of the stator hub 33, in which the an electromotor subsystem 20 at least partially including electromotor stator 23 and/or electromotor rotor 25 may be arranged. In the illustrated embodiment, the entire electromotor rotor 23 as well as control electronics 21 and part of the electromotor stator 23 are arranged inside of the electromotor cavity 47. The electromotor cavity 47 is sealed off from the air-cooling system 7 through which cooling air a flows in order to protect the electronics from residual contaminants c in the cooling air a. The electromotor cavity 47 may be arranged in the axial direction between the forward bearing 35 and the rearward bearing 36. In the radial direction, the electromotor cavity 47 may surround the central cavity 43. The electromotor cavity 47 may have a generally annular shape.

A blisk cavity 45 may be provided in the vicinity of the blisk 53 or disc to which the rotor blades 51 are attached. The blisk cavity 45 may have a generally annular shape. The blisk cavity may be arranged in the radial direction between the forward bearing 35 together with a wall formed by the bearing structure 30 and the blisk 53. In the axial direction, the blisk cavity 45 may be arranged behind the nose cone cavity 41. The blisk cavity 45 may be arranged between the nose cone cavity 41 on one side and on the other side the electromotor cavity 47 and/or the central cavity 43. In the illustrated embodiment, the blisk cavity 45 is provided with at least one air sink 49. Alternatively, the blisk cavity 45 may be separated from the air-cooling system 7. In some embodiments the blisk cavity 45 is provided with at least one inlet opening 70.

In the embodiment illustrated in Fig. 4, the air-cooling system 7 has an inlet opening 70 in the propeller rotor 5, specifically the nose cone 50, leading to the nose cone cavity 41, and an air sink 79 connected to the blisk cavity 45. The vortex chamber 71 is arranged upstream of the subsystems with regard to the flow of cooling air a from the inlet opening 70 to the air sink 79. The air-cooling system 7 receives an intake stream of cooling air a in the nose cone cavity 41 provided with the inlet opening 70. The air-cooling system 7 guides the cooling air a from the nose cone cavity 41 to the central cavity 43. From the central cavity 43 cooling air may exit, for example through a blisk cavity 45 and/or rearward cavity 49 provided with an air sink 79. The air sink 79 is situated in the axial direction between the propeller rotor 5, specifically the blisk 53, and the stator 3, specifically the bearing structure 30 forming the forward end of the hub 33. In the presently shown example, the subsystems are cooled through cooling air a within the central cavity 43 and possibly the blisk cavity 45. As the cooling air a is transferred between the central cavity 43 to an adjacent cavity besides the first or second bearing 35, 36, a seal may be provided to keep the bearing 35, 36 separated from the flow of cooling air a in the air-cooling system 7. The seal may be firmly attached to the bearing structure 30.

The electromotor cavity 47 (electronics cavity) is not part of the air-cooling system 7. The electromotor cavity 47 is separated from the air-cooling system 7. A heat exchange membrane 80 acts as a fluid barrier to separate a closed cooling circuit 8 containing electromotor electronics in the electromotor cavity 47, in particular control electronics 21 and/or electromagnets, from the air-cooling system 7. The closed cooling circuit 8 may contain, preferably dry, air as coolant m. The coolant m inside of the closed cooling circuit 8 is moved throughout the electromotor cavity 47. The closed cooling circuit 8 may contain directing means, such as an impeller 81, 82. The electromotor cavity 47 may comprise a first section associated with the propeller stator 3 and a second section associated with the propeller rotor 5. The electromotor rotor 23 may be contained within the first section. The electromotor stator may be contained within the second section. Control electronics 21 of the electromotor 2 may be arranged in the first and/or second section. The at least two sections of the electromotor cavity 47 may be configured to rotate with respect to each other during operation of the propeller engine 1. The directing means may be realized by vanes 81, 82 attached to the propeller stator 3 at the interface of the second and first sections. Alternatively or additionally, the directing means may include blades attached to the propeller rotor 5 at the interface of the first and section sections (not shown). The directing means serve to circulate coolant m in the closed cooling circuit 8 between the electromotor subsystem 20, where the coolant m receives heat, and the heat exchange membrane 80, where the coolant m transfers heat to the air-cooling system 7.

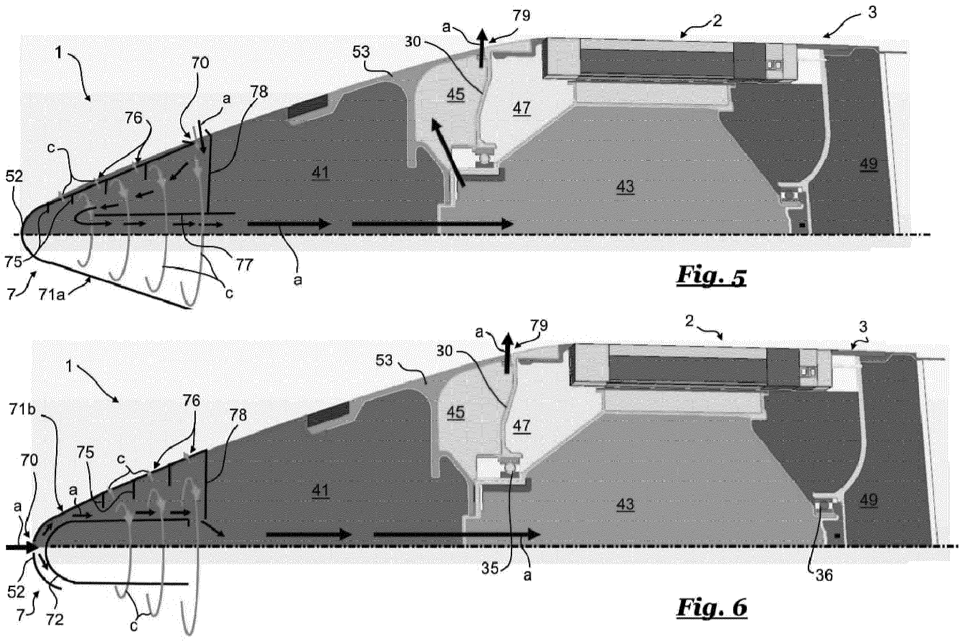

Fig. 5 shows a schematic sectional view of a propeller engine 1 in including a cyclone separator 71a in the nose cone 50. The propeller engine 1 contains an air-cooling system 7. The air-cooling system 7 has an inlet opening 70 in the circumferential outer surface 56 of the nose cone 50 between the nose tip 52 and the rotor blades. Although Fig. 5 shows just one single inlet opening 70, the air-cooling system 7 may alternatively include two or more inlet openings 70, which may preferably be arranged circumferentially spaced on the nose cone 50 with essentially the same distance from the nose tip 52.

The single or at least one inlet opening 70 may be provided with an inlet channel 73. The inlet channel 73 may be angled towards the front of the propeller engine 1 and/or in the circumferential direction. The inlet channel 73 may have partially circumferential extension around the rotary axis R to guide an inlet stream of cooling air into the cyclone separator 71a with a predefined circumferential (tangential) orientation. The inlet channel 73 leads directly into the vortex chamber realized as a cycle separator 71a. The cyclone separator 71a is arranged inside of the nose cone cavity 41. Approximately the front half of the nose cone cavity 41 is configured as the cyclone separator 71a.

The cyclone separator 71a of the embodiment shown in Fig. 5 comprises a primary radial wall 78 (separation wall) extending from the outer wall of the nose cone 50 radially inwards to a radially central axial conduit 77. The primary radial wall 78 realizes an airtight separation of disk-like shape which separates the cyclone separator 71a from the remaining part of the nose cone cavity 41 in the axial direction. The radially central axial conduit 77 is a tube of essentially circular cross-section coaxial and concentric with the rotary axis R. The radially central axial conduit 77 extends in the axial direction from a position rearward of the primary radial wall 78 towards the proximity of the nose tip 52. The radial wall of the conduit 77 is airtight or almost airtight so that cooling air entering the air-cooling system 7 at the inlet opening 70 must first move forward in the axial direction to the nose tip 52 and pass through the cyclone separator 71a before it may enter the radially central axial conduit 77 to pass from the cyclone separator 71a to subsystems downstream thereof. The volume of the cyclone separator 71a is defined by the separation wall 78, the central conduit 77 and the inside surface of the outer wall of the nose cone 50. The cyclone separator 71a includes a multitude of drains 76 for discharging contaminants c. The drains 76 lead out of the cyclone separator 71a through the outer wall of the nose cone to the environment.

Inside of the vortex chamber realized as a cyclone separator 71a cooling air of the air-cooling system 7 is guided, preferably forced, along a spiraling path from the inlet opening 70 to the front entry of the central conduit 77. The cyclone separator 71a has a (cone-like) truncated shape extending in the radial direction crosswise the rotary axis R. The cyclone separator 71a is configured such that cooling air is forced to enter from the outside at a radially outward area of the cyclone separator 71a and must follow a flow path to a radially central area of the cyclone separator 71a where the entry of the central conduit 77 is arranged. While moving radially inward, cooling air is also forced to move in an axial direction corresponding to the rotary axis R, so that the cooling air must follow a spiraling path. The radially outmost part of the spiraling path is arranged at the inlet opening 70 in the radially innermost part of the spiraling path of the front entry of the central conduit 77.

During the inward spiraling movement of the cooling air inside of the cyclone separator 71a, centrifugal forces act upon the cooling air a and any contaminants c which may also have entered the inlet opening 70 together with the inlet stream of cooling air. As contaminants c have a greater mass than (clean and/or dry) cooling air, the centrifugal forces acting upon contaminants c are correspondingly greater than those acting upon the (clean and/or dry) cooling air itself. Consequently, the centrifugal force urges contaminants c outwardly, much more than pure cooling air a. The radially outer wall of the cyclone separator 71a is configured to receive contaminants c and guide those contaminants c to one or multiple drains 76.

In order to enhance the guidance of the contaminants c to one or more drains 76, the cyclone separator 71a may be equipped with one or more radial walls 75. The radial wall or walls 75 for guiding contaminants c to a respective drain 76 may have a circular disk-like shape or a threadlike spiraling shape (helix screw). The one or more radial walls 75 are preferably attached to the radial inside of and extend radially inward from the outside wall circumferentially enclosing the cyclone separator 71a. It may be preferred that the inward extension of the radial wall(s) 75 is only a fraction, preferably less than half, more preferably less than one quarter, of the radius of the cyclone separator 71a and the basis of the wall 75, such that cooling air can bypass the radial wall with ease. The radial extension of the wall(s) 75 may be essentially the same for one or more walls 75 in the axial direction of the cyclone separator 71a. Alternatively all of the radial wall(s) 75 has or have a constant open inner diameter (not shown).

In the embodiment shown in Fig. 5, the air-cooling system 7 extends through the nose cone cavity 41, which is provided with the inlet opening 70 and cyclone separator 71a, and further through the central cavity 43 and possibly the blisk cavity 45 before exiting through an air sink 79. Similar to the embodiment of Fig. 4, the air sink 70 may be realized as a, preferably annular, gap, between the tail end of the blisk 43 and the front end of the bearing structure 30.

Fig. 6 illustrates a schematic sectional view of a propeller engine 1 according to a further embodiment including a different cyclone separator 71b arranged inside of the nose cone 50. The embodiment shown in Fig. 6 essentially corresponds to that previously described with respect to Fig. 5, the main difference being the design of the cyclone separator 71b realizing a vortex chamber. The second separator 71b receives an inlet stream of cooling air a from the ambience through a single inlet opening 70 arranged centrally and coaxially at the nose tip 52 of the nose cone 50. The cyclone separator 71b includes a radially central deflector 72 to urge the inlet stream of cooling air a in any airborne contaminants c radially outward, away from the rotary axis R. Cooling air a is guided in the cyclone separator 71b in a path spiraling radially outward from the nose tip 52 along the outer wall of the second separator 71b to the primary radial wall 78.

The primary radial wall 78 realizes a separation of disk-like shape which separates the cyclone separator 71a from the remaining part of the nose cone cavity 41 in the axial direction. A radially central axial conduit 77 is formed through the separation wall 78 in the axial direction behind the deflector 72. The diameter of the deflector 72 is preferably wider than that of the radially central axial conduit 77 through the separation wall 78. The volume of the cyclone separator 71a is defined by the separation wall 78, the inside surface of the outer wall of the nose cone 50 and the deflector 72.

The radially central part of the cyclone separator 71b is not immediately accessible for cooling air a entering through the inlet opening 70 at the nose tip 52. The deflector 72 ends with an axial distance forward of the separation wall 78, so that cooling air a may flow radially inward in the proximity of the separation wall 78 towards the rotary axis R to exit the cyclone separator 71b in a central part thereof through the central conduit 77.

The cyclone separator 71b illustrated in Fig. 6 includes several sets of drains 76 for contaminants c behind one another in the axial direction. Each set of drains 76 contains at least one drain 76, preferably several drains circumferentially spaced. In the embodiment shown in Fig. 6, the air-cooling system 7 extends through the nose cone cavity 41, which is provided with the inlet opening 70 and cyclone separator 71a at the nose tip 52, and further through the central cavity 43 and possibly the blisk cavity 45 before exiting through an air sink 79.

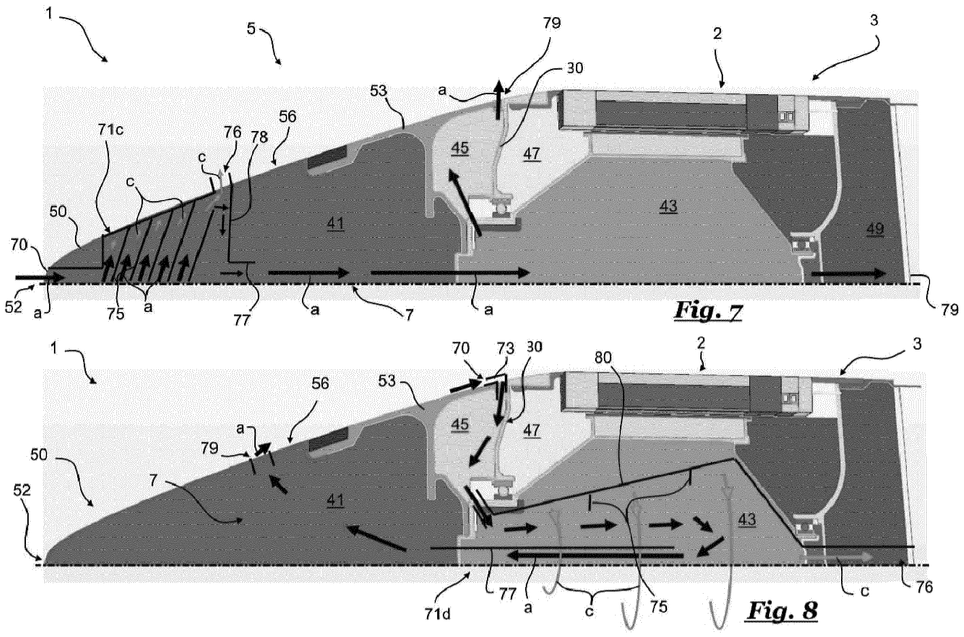

Fig. 7 illustrates a schematic sectional view of a propeller engine 1 according to another embodiment including another cyclone 71c separator in the nose cone 50. The cyclone separator 71c illustrated in Fig. 7 essentially corresponds to that shown in Fig. 6 with the main difference that no dedicated deflector 72 is disposed inside of the vortex chamber.

The cyclone separator 71c of Fig. 7 has its inlet opening 70 for receiving an inlet stream of cooling air a arranged centrally at the nose tip 52 of nose cone 50 and a radially central axial conduit 77 allows cooling air a to pass in the proximity of the rotary axis R through a separation wall 78 which divides the nose cone cavity 41 in the axial direction, wherein the cyclone separator 71c is arranged forward of said separation wall 78. One or more radial walls 75 are disposed inside of the cyclone separator 71c which extend radially inwards from the radial outer wall of the cyclone separator 71c to the rotary axis 71. Optionally, a small central conduit may be formed through at least one radial wall 75, especially through the second and/or subsequent radial walls 75 in the axial direction, but preferably not through the first (forward) radial wall 75.

The one or more radial walls 75 form a helical screw like shape which takes up the majority of the volume of the cyclone separator 71c shown in Fig. 7. The helical screw may include a single, two or more walls 75 which may define a corresponding number of screw threads. One or more eccentrical conduits offset from the rotary axis R in the radial direction may allow portions of the cooling air a to pass from on thread to a subsequent one (or to skip a pitch of a singular thread) in the axial direction.

At the rear end of the helix screw formed by the one or more radial walls 75, at least one aperture is disposed, preferably in the proximity of the radially outer wall of the cyclone separator 71c, for both cooling air a and centrifugally sedimented contaminants c, to leave the screw. It may be preferred that the aperture is arranged near a drain 76 of the air-cooling system 7. The cyclone separator 71c is configured to discharge contaminants c through said drain 76 separated from the cooling air a with the aid of the radial walls 75 forming a helix screw. The radial wall or walls 75 end with an axial distance forward of the separation wall 78, so that cooling air a may flow radially inward in the proximity of the separation wall 78 towards the rotary axis R to exit the cyclone separator 71c in a central part thereof through the central conduit 77.

In the embodiment shown in Fig. 7, the air-cooling system 7 extends through the nose cone cavity 41, which is provided with the inlet opening 70 and cyclone separator 71a at the nose tip 52, and further through the central cavity 43 and possibly the blisk cavity 45 before exiting through an air sink 79.

Fig. 8 illustrates a schematic sectional view of a propeller engine 1 according to an embodiment including a cyclone separator 71d arranged in the central cavity 43. The embodiment illustrated in Fig. 8 thus differs from the above-mentioned embodiments primarily in that the vortex chamber 71 is arranged not in the nose cone cavity 41 but in the central cavity 43. Another significant difference with respect to the above-mentioned embodiments is the provision of the air inlet 70 in the blisk 53 downstream of the air sink 79 which is arranged in the axial direction between the nose tip 52 and the rotor blades, upstream of the air inlet 70 with regard to the core flow of ambient air through the propulsion system.

In the embodiment shown in Fig. 8, the air-cooling system 7 extends through the blisk cavity 45, which is provided with the inlet opening 70, through the central cavity 43 provided with the cyclone separator 71d and further through the nose cone cavity 41 before exiting through an air sink 79. In this embodiment, the drain 76 passes from the cyclone separator 71d arranged in the central cavity 43 through the rearward cavity 49 to the aft of the propeller engine 1 (not shown).

The nose cone cavity 41 defines a large empty volume in the propeller rotor 5 forward of the forward bearing 35 covered by the nose cone 50. The air sink 79 is arranged in the axial and/or radial direction between the nose tip 52 and the rotor blades and/or blisk 53. The axial position and/or shape of the air sink 79 may be configured to improve a pressure difference between the air inlet 70 and the air sink 79 which pressure difference urges the inlet stream of cooling air a to flow through the air-cooling system 7 and the intended direction.

The cyclone separator 71d may receive cooling air a through an end report forward of the forward bearing 35. The cyclone separator 71d has a generally truncated shape flaring from the front towards the rear of the propeller engine 1 within the central aperture 41. The outside wall of the cyclone separator 71d may serve as a heat exchange membrane 80 separating the closed cooling circuit 8 from the air-cooling system 7. The rearward wall 78' of the cyclone separator 71d is a radial wall 78' defining the rearward end of the cyclone separator 71d and possibly the central cavity 43.

In the cyclone separator 71d shown in Fig. 8, contaminants c are gathered along the radially outer wall with the aid of the centrifugal force and thereby separated from the cooling air a. The rearward wall 78' has a truncated shape becoming narrower from the front towards the rear which may connect to the drain 76 for discharging contaminants c at or close to the rotary axis R. The drain 76 preferably has an essentially circular cross-section concentric and coaxial with the rotary axis R. A radially central axial conduit 77 is provided to guide cooling air a from the rearward end of the cyclone separator 71d in the forward direction of the propeller engine 1 towards the air sink 79.

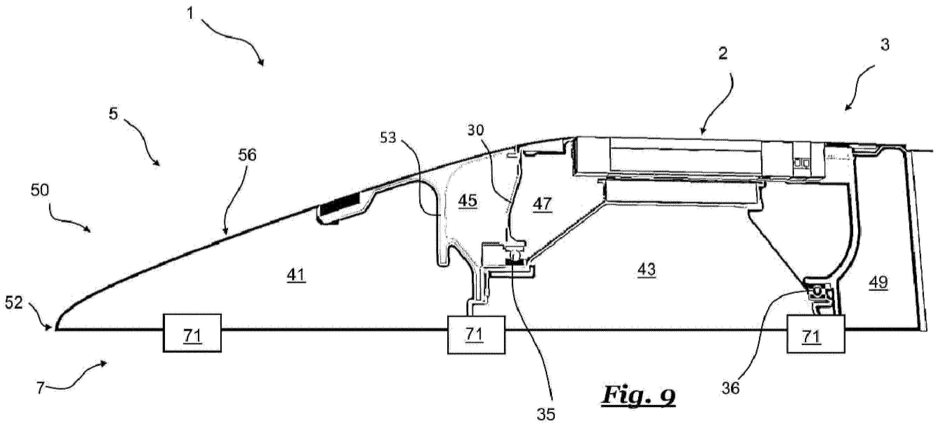

Fig. 9 illustrates a schematic sectional view of a propeller engine 1 according to a particular embodiment including multiple vortex chambers 71. The embodiment of a propeller engine 1 shown in Fig. 9 is a specifically shown to comprise three different vortex chambers 71. One or more of the vortex chambers 71 may be realized as a cyclone separator. Alternatively, one or more of the vortex chambers 71 may be realized as a vortex modulator. In particular, all of the vortex chambers 71 may be realized as a vortex modulator or as a cyclone separator. A first vortex chamber 71 may be arranged near the nose tip 52 and/or in the nose cone cavity 41. A second vortex chamber 71 may be arranged near the forward bearing 35 and/or in the central cavity 43. A third vortex chamber may be arranged near the rearward bearing 36 and/or in the central cavity 43.

According to one embodiment, the second and third vortex chambers 71 may be vortex modulators for providing an increased stream of cooling air a to at least one subsystem, particularly an adjacent bearing 35/36, when the propeller engine 1 is operated with high RPM, in particular above a predefined threshold. The first vortex chamber 71 upstream of the second and/or third vortex chamber 71 may preferably realize a cyclone separator for discharging contaminants c from the cooling air a.

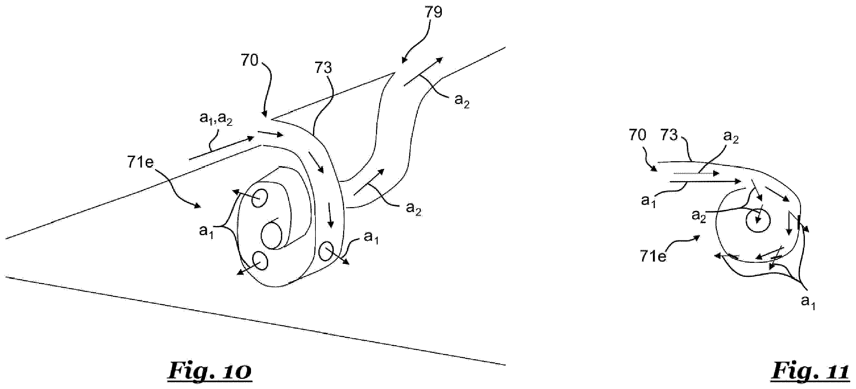

In the embodiments illustrated in Figs. 5 to 10, different exemplary types and arrangements of vortex chambers 71, 71a, 71b, 71c, 71d, 71e are shown which may be used in a propeller engine 1 individually or in combination, for example as indicated in Fig. 9. For ease of intelligibility, no rotor blades nor stator vanes are shown in Figs. 5 - 10. The general working principle of a cyclone separator 71a, 71b, 71c, 71d realizing a vortex chamber 71 is described above with regard to the embodiment shown in Fig. 5 but it shall be understood that those principles are likewise utilized in any other embodiment including a cyclone separator. The general working principle of a vortex modulator 71e realizing a vortex chamber 71 is described below with regard to Figs. 10 and 11.

Fig. 10 shows a schematic illustration of a propeller engine 1 according to a particular embodiment including a vortex modulator 71e realizing a vortex chamber which is shown in Fig. 11 in further detail.

The vortex modulator 71e comprises a spiral shaped conduit 83 connected to the inlet opening 70 so as to receive cooling air a₁, a₂ at the outer end of the spiral shaped conduit 83 in a tangential direction. The vortex modulator 71e has one or more (here: three) first openings 85 arranged in a circumferential wall section of the spiral shaped conduit 83 for guiding cooling air a₁, a₂ to at least one subsystem and at least one second opening 87 arranged at the inner end of the spiral shaped conduit 83 connected with an air sink 79.

The vortex modulator 71e may be operated in a first state in which cooling air a₁ is guided through the vortex modulator 71e predominantly to at least one subsystem, preferably through one or more first openings 85, and a second state in which cooling air a₂ is guided by the vortex modulator 71e predominantly to the air sink 79. The vortex modulator 71e may be operated in the first state in case of a low pressure difference between the inlet opening 70 and the air sink 79, preferably below a predefined pressure difference threshold value, and in the second state in case of a high pressure difference between the inlet opening 70 and the air sink 79, preferably above a predefined pressure difference threshold. The center axis of the vortex modulator 71e preferably corresponds to the rotary axis R of the propeller rotor 5 in a coaxial and/or concentrical manner.

For example, the vortex modulator 71e may be configured to predominantly supply one or more subsystem with cooling air a₁ through the first opening 85 in a first state corresponding to a takeoff mode of the aircraft 100. Alternatively or additionally, the vortex modulator 71e may be configured to predominantly return cooling air a₂ received at the inlet opening 7 to an air sink 79 through the second opening 87.

The features disclosed in the above description, in the figures and in the claims can be of importance both individually and in any combination for the realization of the invention in its various configurations.

### Reference Numerals

- 1: propeller engine
- 2: electromotor
- 3: propeller stator
- 5: propeller rotor
- 7: air-cooling system
- 8: closed cooling circuit
- 11: shroud
- 20: electromotor subsystem
- 21: control electronics
- 23: electromotor stator
- 24: gap
- 25: electromotor rotor
- 30: bearing structure
- 31: stator vane
- 33: hub
- 35: first bearing
- 36: second bearing
- 41: nose cone cavity
- 43: central cavity
- 45: blisk cavity
- 47: electromotor cavity
- 49: rearward cavity
- 50: nose cone
- 51: rotor blade
- 52: tip
- 53: blisk
- 54: circumferential wall
- 55: shaft
- 56: outer surface
- 62a: cover, nose tip shield
- 62b: cover
- 63: concave grooves
- 70: inlet opening
- 71: vortex chamber
- 71a, 71b, 71c, 71d: cyclone separator
- 71e: vortex amplifier
- 72: deflector
- 73: inlet channel
- 75: radial wall
- 78: radial wall, separation wall
- 78': radial wall, rearward wall
- 76: drain
- 77: radially central axial conduit
- 79: air sink
- 80: heat exchange membrane
- 81: vane
- 82: vane
- 83: spiral shaped conduit
- 85: first opening
- 87: second opening
- 100: aircraft
- 103: fuselage
- 105: wing
- 107: aileron
- 110: array

- a, a₁, a₂: cooling air
- m: closed circuit coolant
- c: contaminants
- d: width
- F: flight direction
- R: rotary axis
- T: thrust direction
- X: roll axis, longitudinal axis
- Y: pitch axis, lateral axis
- Z: yaw axis, vertical axis

## Claims

1. Propeller engine (1), configured for providing thrust for an aircraft (100), in particular an aircraft (100) having vertical takeoff and landing capability, comprising:
a bearing structure (30);
a propeller rotor (5) beared by the bearing structure (30), wherein the propeller rotor (5) includes multiple blades (51) and, upstream of the blades (51), a nose cone (50) which are attached to rotate with the propeller rotor (5),
at least one electromotor (2) configured for driving the propeller rotor (5); and
an air-cooling system (7) for at least one subsystem of the propeller engine (1) including at least one inlet opening (70) for receiving an intake stream of cooling air through the propeller rotor (5),
wherein the air-cooling system (7) includes least one vortex chamber (71, 71a, 71b, 71c, 71d, 71e) connected to the propeller rotor (5), wherein the vortex chamber (71, 71a, 71b, 71c, 71d, 71e) is configured to receive the cooling air from the inlet opening (70) before the cooling air is provided to the at least one subsystem.

2. Propeller engine (1) according to claim 1, further including a propeller stator (3) having one or more radially extending vanes (31), and
a shroud (11) circumferentially surrounding the propeller stator (3) and optionally the propeller rotor (5),
wherein the inlet opening (70) is arranged upstream of stator vanes (31),
in particular wherein the shroud (11) defines a width (d), in particular inner diameter, no larger than 500 mm, in particular in a range of 200 mm to 400 mm, more particularly in a range of 270 mm to 330 mm.

3. Propeller engine (1) according to claim 1 or 2, wherein the propeller rotor (5) comprises a disk including an annular body portion to which the rotor blades (51) are firmly attached, wherein in particular the annular body portion and the rotor blades may be formed integrally

4. Propeller engine (1) according to claim 3, wherein the nose cone (50) is rigidly attached to the disk, wherein in particular the nose cone and the disk form a continuous flow profile.

5. Propeller engine (1) according to one of the preceding claims, wherein the, preferably singular, inlet opening (70) is arranged in the nose cone (50), preferably at the tip (52) of the nose cone (50).

6. Propeller engine (1) according to one of the claims 1 to 4, wherein the at least one inlet opening (70) is arranged on a circumferential wall (54) of propeller rotor (5), preferably the nose cone (50), in particular wherein the inlet opening (70) leads to an inlet channel (73) extending in a circumferential direction with respect to the rotary axis (R) of the propeller rotor (5).

7. Propeller engine (1) according to claim 6, wherein the at least one inlet opening (70) is arranged downstream of the rotor blades (51), in particular at a rear end of the disk.

8. Propeller engine (1) according to one of the preceding claims, wherein the inlet opening (7) is provided with a cover (62a, 62b), in particular a nose tip shield (62a), to prevent water ingestion into the air-cooling system (7).

9. Propeller engine (1) according to claim 8, wherein inlet channel (73) extends in a forward direction from the inlet opening (70) and wherein the inlet channel (70) is radially covered by the cover (62b),
in particular wherein the inlet channel (73) is arranged between circumferentially adjacent concave grooves (63) on the outer circumference of the nose cone (50) and wherein the cover (62b) forms a convex shield above inlet channel (73).

10. Propeller engine (1) according to one of the preceding claims containing at least one cavity, wherein the air-cooling system (7) extends through one or more cavities, in particular
- a nose cone cavity (41) disposed inside of the nose cone (50),
- a central cavity (43) surrounded by the electromotor (2) and/or the stator vanes (31) in the radial direction and/or between a first bearing (35) and a second bearing (36) in an axial direction;
- a blisk cavity (45) adjacent to the rotor blades (51),
- a shaft cavity (40) of a hollow shaft (55) connecting the rotor blades (51) to the electromotor (2);
- an electronics cavity (47) partially containing the electromotor (2), in particular the electromotor rotor (25), and being surrounded by the propeller stator (5), in particular the stator vanes (31) and/or the electromotor stator (23), and/or
- a rearward cavity (49) arranged to the rear of the electromotor (2), the second bearing (36) and/or the stator vanes (31),
wherein preferably the at least one vortex chamber (71, 71a, 71b, 71c, 71d, 71e) is provided inside of the cavity.

11. Propeller engine (1) according to one of the preceding claims, wherein the vortex chamber (71) includes at least one cyclone separator (71a, 71b, 71c, 71d) for removing contaminants, such as particles and/or water, from cooling air of the intake stream.

12. Propeller engine according to claim 11, wherein the cyclone separator (71a, 71b, 71c, 71d) includes at least one radial wall (75, 78) for guiding contaminants extending in a radial direction from the rotary axis (R), in particular wherein the at least one radial wall (75) forms a helix screw around the rotary axis (R), and/or in particular wherein the radial wall (75, 78) is at least sectionally or completely attached to a circumferential inner surface of a cavity, in particular the nose cone cavity (41) or the central cavity (43).

13. Propeller engine according to claim 10 or 11, wherein the cyclone separator (71a, 71b, 71c, 71d) includes a radially central axial conduit (77), in particular surrounded by the radial wall (75, 78) or radial walls, and/or a radially central deflector (72), in particular arranged in the radially central axial conduit (77) and surrounded by the radial wall (75, 78) or radial walls.

14. Propeller engine according to one of the claims 11 to 13, wherein the cyclone separator (71a, 71b, 71c, 71d) includes at least one drain (76) for discharging contaminants to the atmosphere, in particular wherein the at least one drain (76) is realized as a radial aperture particularly from the nose cone cavity (41) or as an axial aperture particularly from the central cavity (43).

15. Propeller engine (1) according to one of the preceding claims, wherein the air-cooling system (7) includes at least one air sink (79) for discharging the cooling air, in particular to a core flow of the propeller engine (1), wherein the air-cooling system (7) is configured such that a pressure difference between inlet opening (70) and the air sink (79) urges the cooling air from inlet opening (70) through nose cone (50), preferably by at least one subsystem, and/or through at least one cavity, to the air sink (79).

16. Propeller engine (1) according to claim 15, wherein the inlet opening (70) is arranged upstream of the air sink (79) with respect to the core flow of the propeller engine (1), wherein in particular the air sink (79) is arranged downstream of the at least one rotor blade (51).

17. Propeller engine (1) according to claim 15, wherein the inlet opening (70) is arranged downstream of the air sink (79) with respect to the core flow of the propeller engine (1), in particular wherein the inlet opening (70) is arranged downstream of the at least one rotor blade (51) on the circumference of the propeller rotor (5) and the air sink (79) is arranged upstream of the at least one rotor blade (51).

18. Propeller engine (1) according to one of the preceding claims, wherein the vortex chamber (71) includes at least one vortex modulator (71e) for selectively guiding cooling air to at least one subsystem or to the air sink (79).

19. Propeller engine (1) according to claim 18, wherein the at least one vortex modulator (71e) is associated with multiple subsystems and/or wherein the propeller engine comprises a plurality of vortex modulators (71e) associated with at least one respective subsystem.

20. Propeller engine (1) according to at least one of the claims 18 or 19, wherein the vortex modulator (71e) has a first state in which cooling air is guided through the vortex modulator (71e) predominantly to at least one subsystem and a second state in which cooling air is guided by the vortex modulator (71e) predominantly to the air sink (79), in particular wherein the vortex modulator (71e) is configured to be operated in the first state in case of a low pressure difference between the inlet opening (70) and the air sink (79), preferably below a predefined pressure difference threshold value, and in the second state in case of a high pressure difference between the inlet opening (70) and the air sink (79), preferably above a predefined pressure difference threshold.

21. Propeller engine (1) according to at least one of the claims 16 to 18, wherein the vortex modulator (71e) comprises a spiral shaped conduit (81) connected to the inlet opening (70) so as to receive cooling air at the outer end (80) of the spiral shaped conduit (81), preferably in a tangential direction, wherein the vortex modulator (71e) has
at least one first opening (83) arranged in a circumferential wall section of the spiral shaped conduit (83) for guiding cooling air to at least one subsystem and
at least one second opening (85) arranged at the inner end (89) of the spiral shaped conduit (81) connected with an air sink (79).

22. Propeller engine (1) according to one of the preceding claims, wherein the at least one subsystem includes a propeller shaft, in particular a hollow shaft (55), at least one bearing, in particular at least one ball bearing, and/or the electromotor (2).

23. Propeller engine, in particular according to one of the preceding claims (1), configured for providing thrust for an aircraft (100), in particular an aircraft (100) having vertical takeoff and landing capability, comprising:
a bearing structure (30);
a propeller rotor (5) beared by the bearing structure (30), wherein the propeller rotor (5) includes multiple blades (51) and upstream of the fan blades (51) a nose cone (50) which are attached to rotate with the propeller rotor (5),
at least one electromotor (2) configured for driving the propeller rotor (5); and
an air-cooling system (7) for at least one subsystem of the propeller engine (1) including at least one inlet opening (70) for receiving an intake stream of cooling air through the propeller rotor (5),
wherein the at least one subsystem includes an electromotor subsystem (20) including a fluid barrier (21) separating a closed cooling circuit (8) containing electromotor electronics, in particular control electronics (21) and/or electromagnets, from the cooling air of the air-cooling system (7).

24. Propeller engine according to claim 23, wherein the electromotor subsystem (20) includes a directing means, such as an impeller, for defining the flow direction of closed cooling circuit fluid, in particular air, preferably dry air, inside of the electromotor subsystem (20).

25. Array (110) of several, in particular two, three or five, propeller engines (1) according to one of the preceding claims, preferably according to claim 2, rigidly coupled to one another, in particular in an axis-parallel manner.

26. Aircraft (100), in particular passenger aircraft, having vertical takeoff and landing capability including a fuselage (103) and at least one propeller engine (1) according to one of the claims 1 to 22, in particular an array (110) according to claim 23, pivotably connected to the fuselage (103) around a pitch axis (Y) of the aircraft (100).
